# EUROPÄISCHE PATENTSCHRIFT

(11) **EP 1 131 214 B1**
(45) Veröffentlichungstag und Bekanntmachung des Hinweises auf die Patenterteilung: **04.06.2003**
(21) Anmeldenummer: 00964200.0
(22) Anmeldetag: 19.09.2000
(51) Int. Cl.: B60B 27/02, F16B 39/02

(54) **RADLAGERUNG, INSBESONDERE FÜR NICHTANGETRIEBENE FAHRZEUGACHSEN**
WHEEL SUSPENSION, ESPECIALLY FOR NONPOWERED VEHICLE AXLES
ROULEMENT DE ROUE, NOTAMMENT POUR ESSIEUX DE VEHICULES NON MENES

(30) Priorität: 21.09.1999 DE 19945255
(43) Veröffentlichungstag der Anmeldung: 12.09.2001
(73) Patentinhaber: BPW Bergische Achsen Kommanditgesellschaft, 51674 Wiehl (DE)
(72) Erfinder: MATHIEU, Michael, 53804 Much (DE)
(74) Vertreter: Christophersen, Ruth
(86) Internationale Anmeldenummer: EP0009145
(87) Internationale Veröffentlichungsnummer: WO01021418

(56) Entgegenhaltungen:
- US-A- 5 533 849
- US-A- 5 573 311

## Beschreibung

Die Erfindung betrifft gemäß Oberbegriff des Anspruchs 1 eine Radlagerung, insbesondere für nichtangetriebene Fahrzeugachsen, mit einer auf einem Achsschenkel mittels Wälzlagern drehbar gelagerten Radnabe, die durch eine mit einem Innengewinde auf ein Außengewinde des Achsschenkels aufgeschraubte Achsmutter gehalten ist.

Aus der EP 0 529 252 B1 ist eine derartige Radlagerung für Anhängerachsen bekannt, deren zentrale Achsmutter nahe deren Außenseite mit mehreren jeweils radial verlaufenden Schlitzen versehen ist. Die Teilung der Schlitze ist asymmetrisch und beträgt, im Uhrzeigersinn betrachtet, zweimal 60°, einmal 45°, wieder zweimal 60° und noch einmal 75°. Hierdurch wird ein maximaler Verdrehwinkel der Achsmutter auf dem Achsschenkel zum Einsetzen eines Verriegelungsbolzens von 15° erreicht. Mit diesen Werten wird bereits eine gute und in den meisten Fällen ausreichende axiale Lagereinstellung erreicht.

Von ebensolcher, wenn nicht gar größerer Bedeutung für die optimale Lagereinstellung ist jedoch die Anzugskraft, mit der die Achsmutter nach dem Aufsetzen der Nabeneinheit auf dem Achsschenkel angezogen wird. Von den meisten Fahrzeugherstellern werden hierzu die zu erreichenden Anzugsmomente vorgeschrieben. Die Erzielung des richtigen Anzugsmomentes setzt aber auch die korrekte Bedienung des beim Anziehen verwendeten Werkzeuges voraus.

Aus der DE 37 13 224 A1 ist es bekannt, eine durch eine zusätzliche Kontermutter gesicherte Achsmutter auf ihrer nach innen zu dem Radlager gekehrten Stirnfläche mit einer Verschleißschicht zu versehen, über die sich die Achsmutter beim Vorspannen mit einem vorbestimmten Drehmoment an dem Innenring des Wälzlagers abstützt. Die verwendete Verschleißschicht besteht aus einem Material, welches fest genug ist, den bei der Vorspannung der Achsmutter auftretenden axialen Druck auszuhalten, welches jedoch bei Inbetriebnahme des Kraftfahrzeuges aufgrund des betriebsbedingten Temperaturanstiegs verschwindet. Auf diese Weise entsteht erst während des Fahrbetriebes ein gewisses, gewünschtes Lagerspiel. Um ein späteres ungewolltes Lösen der Achsmutter zu vermeiden, wird diese mittels der außen liegenden Kontermutter gesichert.

Der Erfindung liegt die **Aufgabe** zugrunde, bei einer Radlagerung, insbesondere für nichtangetriebene Fahrzeugachsen, Fehlerquellen auszuschalten, wie sie durch unsachgemäßes Anziehen der zentralen Achsmutter auftreten können.

Zur **Lösung** dieser Aufgabenstellung wird bei einer Radlagerung der eingangs genannten Art vorgeschlagen, daß sich die Achsmutter aus einem Innenteil, welches mit dem Innengewinde versehen ist, und einem hierzu koaxialen Außenteil zusammensetzt, an dem die zum Anziehen und Lösen der Achsmutter erforderlichen Schlüsselflächen ausgebildet sind, daß das Außenteil auf dem Innenteil beweglich ist und mit dem Innenteil mittels eines oder mehrerer federbelasteter Sperrelemente derart verbunden ist, daß in Löserichtung ein wesentlich höheres Drehmoment als in Anzugsrichtung auf das Innenteil übertragbar ist.

Vorzugsweise ist hierbei das Außenteil mit einer axialen Verzahnung versehen, die federbelastet in eine entsprechende Gegenverzahnung des Innenteils eingreift, wobei die Verzahnung Flanken aufweist, die beim Außenteil in Anzugsrichtung rampenförmig und in Löserichtung steil sind.

Bei einer solchermaßen gestalteten Radlagerung sind Fehlerquellen durch unsachgemäßes Anziehen der zentralen Achsmutter ausgeschlossen. Zum kontrollierten Anziehen der Achsmutter ist es nicht erforderlich, z. B. einen Drehmomentschlüssel einzusetzen, dessen Einstellung auf den richtigen Drehmomentwert in der Praxis häufig eine Fehlerquelle darstellt. Bei der erfindungsgemäß eingesetzten Achsmutter ist das damit maximal erreichbare Anzugsmoment bereits gleichsam in der Achsmutter eingestellt, indem sich diese aus einem Innenteil, welches auf den Achsschenkel aufgeschraubt ist, und einem Außenteil zusammensetzt, an dem die zum Anziehen der Achsmutter erforderlichen Schlüsselflächen ausgebildet sind. Innenteil und Außenteil greifen nach Art einer Verzahnung ineinander, wobei die Verzahnung mit Flanken versehen ist, die beim Außenteil in Anzugsrichtung rampenförmig und in Löserichtung steil sind. Der Eingriff der Verzahnung in die Gegenverzahnung ist femer federbelastet, wobei nicht nur die Schräge der Rampen, sondem auch die Größe der Federbelastung fest eingestellt sind und auf diese Weise das maximal vom Außenteil auf das Innenteil übertragbare Drehmoment begrenzen. Fehlbedienungen durch Aufbringung eines zu hohen Anzugsmomentes sind damit ausgeschlossen. Ein zu hohes Anzugsmoment führt zu stark erhöhten Belastungen der Wälzlager und damit zu einem vorzeitigen Lagerverschleiß.

Mit einer Weiterbildung wird vorgeschlagen, daß die Verzahnung an der einen Stimfläche des Außenteils angeformt ist, und daß sich zu Erzielung der Federbelastung eine Druckfeder an der anderen, der Stirnfläche abgewandten Stimfläche des Außenteils abstützt. Vorzugsweise stützt sich in diesem Fall die Druckfeder zur Aufnahme der Reaktionskräfte an einem radial vorstehenden Bund ab, der einstückig an dem Innenteil angeformt ist.

Um die Achsmutter auch bei vorhandenen Radlagerungen nachrüsten zu können, sollte deren Bauvolumen möglichst gering ausfallen. Da das Bauvolumen auch durch die Größe der verwendeten Druckfeder bedingt ist, wird mit einer weiteren Ausgestaltung vorgeschlagen, eine ein- oder mehrfache Tellerfeder als Druckfeder einzusetzen. Mit einer solchen Tellerfeder läßt sich eine hohe Federkraft bei geringem und zudem der Grundform der Achsmutter angepaßtem Bauvolumen erzielen. Hierzu ist es ferner von Vorteil, wenn sich die Tellerfeder auf ihrem großen Durchmesser an dem Außenteil, und auf ihrem kleinen Durchmesser an dem Innenteil abstützt.

In weiterer Ausgestaltung der Radlagerung wird vorgeschlagen, daß sich das Innenteil der Achsmutter zusammensetzt aus einem hülsenförmigen Abschnitt sowie einem flanschförmigem Abschnitt, und daß sich der flanschförmige Abschnitt aus einem inneren Ftanschabschnitt, an dem die Gegenverzahnung ausgebildet ist, und einem äußeren Flanschabschnitt zusammensetzt, mit dem die Achsmutter eine Hinterschneidung der Radnabe hintergreift. Eine solche funktionelle Unterteilung zwischen innerem Flanschabschnitt einerseits und äußerem Flanschabschnitt andererseits ermöglicht es, die Nabe mit den eingesetzten Wälzlagern, einem Stoßring und der Achsmutter vormontiert und als Einheit auf dem Achsschenkel zu montieren und wieder zu demontieren. Mit ihrem äußeren Flanschabschnitt bildet die Achsmutter ein Abziehwerkzeug, indem der äußere Flanschabschnitt ihres Innenteils die Hinterschneidung der Radnabe hintergreift. Diese Hinterschneidung der Radnabe wird vorzugsweise durch einen in die äußere Öffnung der Radnabe eingesetzten Sprengring gebildet.

Demgegenüber erfüllt der innere Flanschabschnitt des Innenteils einen anderen Zweck. An seinem inneren Flanschabschnitt ist die Gegenverzahnung ausgebildet. Außerdem stützt er sich gegen einen auf dem Achsschenkel sitzenden Lagerinnenring des äußeren Wälzlagers der Radlagerung und sichert auf diese Weise das äußere Wälzlager bzw. die gesamte Radlagerung.

Eine bevorzugte Ausgestaltung der Radlagerung ist gekennzeichnet durch ein Verriegelungselement zur Drehverriegelung des Innenteils der Achsmutter auf dem Achsschenkel.

Bei einer weiteren Ausgestaltung der Radlagerung sind die Sperrelemente federbelastete Stifte oder Kugeln, die in eine Verzahnung einrastbar gestaltet sind, vorzugsweise unter dem Druck der Tellerfeder.

Weitere Einzelheiten und Vorteile ergeben sich aus der nachfolgenden Beschreibung der zugehörigen Zeichnungen, in denen eine bevorzugte Ausführungsform einer erfindungsgemäß ausgebildeten Radlagerung dargestellt ist. In den Zeichnungen zeigen:
- Figur 1: eine Radlagerung im Längsschnitt;
- Figur 2: Einzelheiten der Radlagerung nach Figur 1 im Bereich des äußeren Wälzlagers und der zentralen Achsmutter;
- Figur 3: eine Draufsicht auf die auf dem Achsschenkel montierte Achsmutter;
- Figur 4: einen Schnitt durch das Innenteil der Achsmutter;
- Figur 5: eine perspektivische Ansicht des Außenteils der Achsmutter;
- Figur 6: eine Draufsicht auf das Innenteil entsprechend der in Figur 4 eingezeichneten Ansicht Vl;
- Figur 7: im Teilschnitt eine gegenüber den Figuren 1 bis 6 abgewandelte Ausführungsform der zentralen Achsmutter mit einer Mehrzahl federbelasteter Sperrelemente.

Am Ende eines Achskörpers 1 ist ein Achsschenkel 2 befestigt oder angeformt, der mit zwei im Abstand voneinander angeordneten Lagersitzen 3, 4 für ein inneres Wälzlager 5 und ein äußeres Wälzlager 6 versehen ist. Auf den beiden Wälzlagern 5, 6 ist eine einteilig ausgebildetete Radnabe 7 frei drehbar gelagert. Am äußeren Umfang der Radnabe 7 können auf einer Seite eine Bremstrommel oder Bremsscheibe und auf der gegenüberliegenden Seite ein Rad mit Radbolzen befestigt werden.

Auf der Außenseite des inneren Wälzlagers 5 ist ein Stoßring 8 angeordnet, der an seinem äußeren Umfang mit einem bis an die Innenwand der Radnabe 7 heranreichenden Bund 8a versehen ist. Vor dem Bund 8a des Stoßrings 8 wird ein erster Sprengring 9 in eine innen umlaufende Nut der Radnabe eingesetzt.

Am anderen Ende ist, durch eine Kappe abgedeckt, vor dem äußeren Wälzlager 6 eine Achsmutter 10 mit einem angeformtem flanschförmigen Abschnitt 11 angeordnet, dessen äußerer Rand bis nahe an die Innenwand der Radnabe 7 heranreicht. Außen vor dem äußeren Rand des flanschförmigen Abschnitts 11 ist in eine umlaufende Nut der Radnabe 7 ein zweiter Sprengring 12 eingesetzt. Dessen Innendurchmesser ist geringer als der größte Durchmesser des flanschförmigen Abschnitts 11. Unter Zwischenlage einer Ringscheibe 13 stützt sich der flanschförmige Abschnitt 11 der Achsmutter 10 an dem Lagerinnenring 14 des äußeren Wälzlagers 6 ab.

Die Achsmutter 10 ist mit einem Innengewinde auf ein Außengewinde 15 am freien Ende des Achsschenkels 2 aufgeschraubt. Das Innengewinde der Achsmutter 10 befindet sich an einem Innenteil 16 der Achsmutter. Bestandteil der Achsmutter ist femer ein Außenteil 17, an dem die zum Anziehen und Lösen der Achsmutter erforderlichen Schlüsselflächen 18 ausgebildet sind.

Das Innenteil 16 der Achsmutter setzt sich zusammen aus einem hülsenförmigen Abschnitt 19 sowie einem flanschförmigen Abschnitt 11. An dem hülsenförmigen Abschnitt 19 befindet sich an dessen innerem Umfang das Innengewinde. Der flanschförmige Abschnitt 11 des Innenteils 16 gliedert sich in einen inneren Flanschabschnitt 21 und einen äußeren Flanschabschnitt 22. Der innere Flanschabschnitt weist auf seiner einen Seite eine Anlagefläche für die Ringscheibe 13 auf, und ist an seiner anderen, dem Außenteil 17 zugewandten Fläche mit einer Verzahnung versehen. Der äußere Flanschabschnitt 22 hintergreift in der weiter oben bereits beschriebenen Weise die durch den Sprengring 12 definierte Hinterschneidung der Radnabe 7.

Zu der Achsmutter 10 gehören außerdem eine Tellerfeder 23 sowie ein mit einer Spange 24 versehenes Sicherungselement 25, welches ein nachträgliches Verdrehen zwischen Achsmutter I und Achsschenkel 2 verhindert.

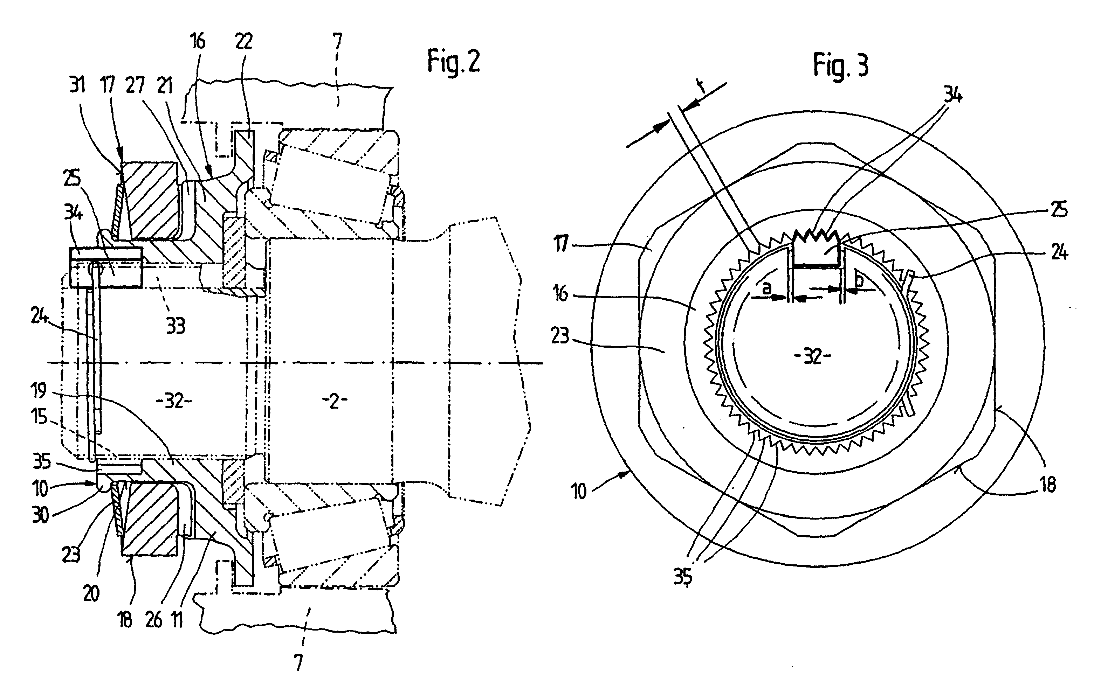

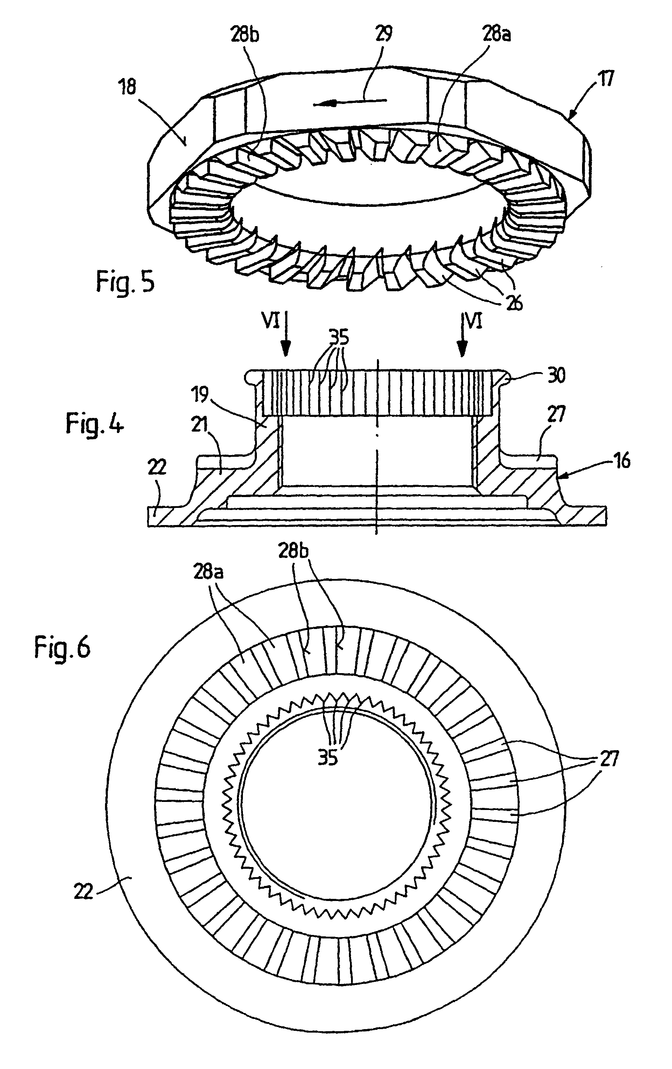

Die Figuren 2 bis 6 lassen erkennen, daß das Außenteil 17 der Achsmutter 10 mit einer Verzahnung 26, und das Innenteil 16 der Achsmutter mit einer korrespondierenden Gegenverzahnung 27 versehen ist. Verzahnung 26 und Gegenverzahnung 27 sind axial zueinander ausgerichtet, greifen daher in radialer Ebene ineinander. Die Struktur der Verzahnung läßt am besten Figur 5 am Beispiel der Verzahnung 26 des Außenteils 17 erkennen. Diese ist mit Flanken 28a, 28b versehen, die in Anzugsrichtung 29 rampenförmig, und in Löserichtung steil sind. Eine entsprechende Struktur kann die Gegenverzahnung 27 des Innenteils 16 aufweisen.

Die Tellerfeder 23 stützt sich mit ihrem inneren Rand an einem radial vorstehenden Bund 30 des Innenteils 16 ab, wo hingegen sich der äußere Rand gegen jene Stirnfläche '31 des Außenteils 17 stützt, die der Verzahnung 26 abgewandt ist und daher nach außen weist. Anstelle der einfachen Tellerfeder 23 kann auch ein Paket von Tellerfedern vorgesehen sein. Die Tellerfeder 23 übt eine Druckkraft auf das Außenteil 17 in Richtung auf den inneren Flanschabschnitt des Innenteils 16 aus, wodurch Verzahnung und Gegenverzahnung druckbetätigt ineinandergreifen. Auf diese Weise arbeitet die Achsmutter 10 nach Art einer Ratsche. Wird in Anzugsrichtung ein vorgegebenes Drehmoment überschritten, können die rampenförmigen Flanken 28a der Verzahnung 26 an den ensprechenden Flanken der Gegenverzahnung 27 aufsteigen, wodurch das Außenteil 17 gegenüber dem sich beim Anziehen starr verhaltenden Innenteil 16 durchrutscht. Ein Anziehen der Achsmutter 10 mit einem zu hohen Drehmoment ist dadurch ausgeschlossen. Das maximale Anzugsmoment wird bestimmt durch die Kennlinie der Tellerfeder 23 sowie die Geometrie und insbesondere Flankenneigung der Verzahnung 26 bzw. Gegenverzahnung 27. In Löserichtung hingegen wird wegen der steilen Flanken 28b stets das volle Drehmoment übertragen.

Nach dem Anziehen der Achsmutter 10 muß diese gegen ein unbeabsichtigtes Lösen gesichert werden. Hierzu ist der zylindrische Endzapfen 32 des Achsschenkels 2 mit einer sich axial erstreckenden Nut 33 versehen, wie sie z. B. als Paßfedemut bekannt ist. In die Nut 33 läßt sich von außen her das Sicherungselement 25 einsetzen. Dieses ist an seiner Außenseite mit einer sich axial erstreckenden Zahnstruktur 34 versehen, die in eine dieselbe Zahnteilung aufweisende Innenverzahnung 35 des Innenteils 16 eingreift. Die Innenverzahnung 35 ist eine sich über 360° erstreckende Geradverzahnung, die sich auf den äußeren Teil des hülsenförmigen Abschnittes 19 des Innenteils 16 beschränkt, wozu das Innenteil 16 dort mit einer entsprechenden Eindrehung versehen ist, über deren Umfang sich die Zähne der Innenverzahnung 35 verteilen.

Figur 3 läßt erkennen, daß das blockartige Sicherungselement 25 in Umfangsrichtung schmaler ist als die Breite der Nut 33. In Figur 3 eingezeichnet ist ein Umfangsspiel a auf der einen, und ein Umfangsspiel b auf der anderen Seite des Sicherungselements 25. Die Umfangsspiele a und b summieren sich zu der für die Zahnstruktur 34 des Sicherungselements 25 und die Innenverzahnung 35 der Achsmutter gemeinsamen Zahnteilung t. Auf diese Weise ist sichergestellt, daß sich nach dem Anziehen der Achsmutter, unabhängig von der jeweiligen Zahnstellung, das Sicherungselement 25 in jedem Fall axial in die Nut 33 einschieben und mittels der den Endzapfen 32 umschlingenden Spange 24 sichern läßt. Das Umfangsspiel der Achsmutter ist dadurch auf den sehr geringen Winkelbereich einer einzigen Zahnteilung t beschränkt. Bei einem solch geringen Verdrehwinkel werden in Abhängigkeit von der Steigung des Gewindes an Achsmutter und Achsschenkel axiale Verstellwege der Achsmutter 10 erreicht, die nur Bruchteile von Millimetern betragen und deshalb an die optimale Einstellung der Radlagerung nahe herankommen.

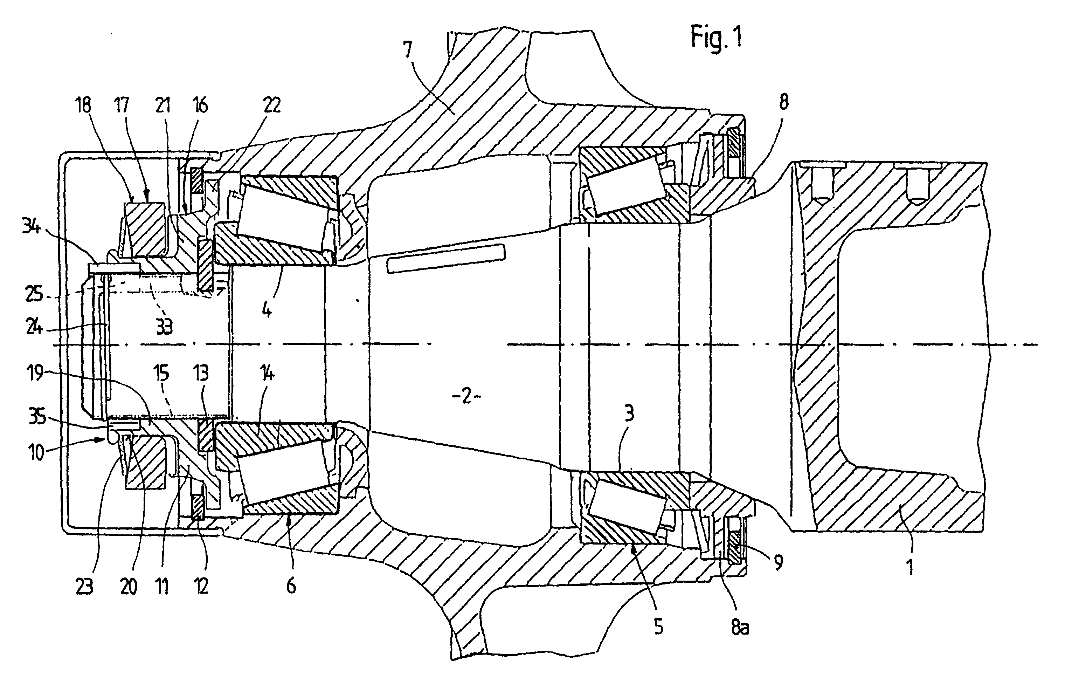

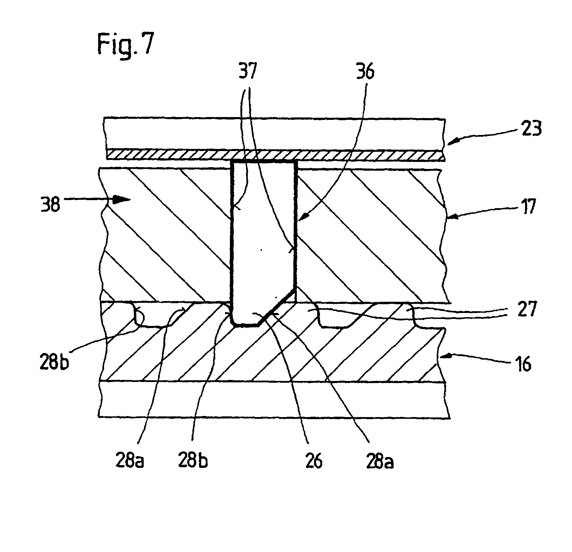

Bei der in Figur 7 dargestellten Ausführungsform der Achsmutter 10 sind Bestandteil des Außenteils 17 mehrere Stifte 36, Kugeln oder dergleichen Sperrelemente, die unter Federbelastung stehen. Diese Federbelastung kann z. B. durch die in diesem Fall alle Stifte 36 zugleich mit Druck beaufschlagende Tellerfeder 23 erzeugt werden. Die Stifte 36 sind jeweils in eigenen Führungen 37 im Material des Außenteils 17 axial geführt. An dem der Feder 23 abgewandten Ende ist jeder Stift 36 mit mindestens einem Zahn als Verzahnung 26 versehen. Diese Verzahnung übernimmt hier jene Funktion, die beim Ausführungsbeispiel nach den Figuren 1 bis 6 die Vielfachverzahnung 26 des Außenteils 17 übernimmt, d. h. den Eingriff in die Gegenverzahnung 27 des Innenteils 16. Auch bei der Ausführungsform nach Figur 7 werden in Anzugsrichtung 38 Drehmomente vom Außenteil 17 auf das Innenteil 16 übertragen, wohingegen die Stifte 36 in Löserichtung sperren.

### Bezugszeichenliste

- 1: Achskörper
- 2: Achsschenkel
- 3: Lagersitz
- 4: Lagersitz
- 5: Inneres Wälzlager
- 6: Äußeres Wälzlager
- 7: Radnabe
- 8: Stoßring
- 8a: Bund
- 9: Sprengring
- 10: Achsmutter
- 11 1: flanschförmiger Abschnitt
- 12: Sprengring
- 13: Ringscheibe
- 14: Lagerinnenring
- 15: Außengewinde des Achsschenkels
- 16: Innenteil
- 17: Außenteil
- 18: Schlüsselfläche
- 19: hülsenförmiger Abschnitt
- 20: Lagerfläche
- 21: innerer Flanschabschnitt
- 22: äußerer Flanschabschnitt
- 23: Tellerfeder
- 24: Spange
- 25: Sicherungselement
- 26: Verzahnung
- 27: Gegenverzahnung
- 28a: rampenförmige Flanke
- 28b: steile Flanke
- 29: Anzugsrichtung
- 30: Bund
- 31: Stirnfläche
- 32: Endzapfen
- 33: Nut
- 34: Zahnstruktur
- 35: Innenverzahnung, Geradverzahnung
- 36: Stift
- 37: Führung
- 38: Anzugsrichtung

- a: Spiel
- b: Spiel
- t: Zahnteilung

## Patentansprüche

1. Radlagerung, insbesondere für nichtangetriebene Fahrzeugachsen, mit einer auf einem Achsschenkel (2) mittels Wälzlagern (5, 6) drehbar gelagerten Radnabe (7), die durch eine mit einem Innengewinde auf ein Außengewinde (15) des Achsschenkels (2) aufgeschraubte Achsmutter (10) gehalten ist,
**dadurch gekennzeichnet,**
**daß** sich die Achsmutter (10) aus einem Innenteil (16), welches mit dem Innengewinde versehen ist, und einem hierzu koaxialen Außenteil (17) zusammensetzt, an dem die zum Anziehen und Lösen der Achsmutter (10) erforderlichen Schlüsselflächen (18) ausgebildet sind, daß das Außenteil (17) auf dem Innenteil (16) beweglich ist und mit dem Innenteil (16) mittels einer oder mehrerer federbelasteter Sperrelemente derart verbunden ist, daß in Löserichtung ein wesentlich höheres Drehmoment als in Anzugsrichtung auf das Innenteil (16) übertragbar ist.

2. Radlagerung nach Anspruch 1, **dadurch gekennzeichnet, daß** das Außenteil (17) mit einer axialen Verzahnung (26) federbelastet in eine entsprechende Gegenverzahnung (27) des Innenteils (16) eingreift, und daß die Verzahnung Flanken (28a, 28b) aufweist, die beim Außenteil (17) in Anzugsrichtung (29, 38) rampenförmig und in Löserichtung steil sind.

3. Radlagerung nach Anspruch 2, **dadurch gekennzeichnet, daß** die Verzahnung (26) an der einen Stimfläche des Außenteils (17) angeformt ist, und daß sich zur Erzielung der Federbelastung eine Druckfeder (23) an der anderen, der Stimfläche abgewandten Stimfläche (31) des Außenteils (17) abstützt.

4. Radtagerung nach Anspruch 1 oder Anspruch 2, **dadurch gekennzeichnet, daß** sich eine Druckfeder (23) zur Aufnahme der Reaktionskräfte an einem radial vorstehenden Bund (30) des Innnenteils (16) abstützt.

5. Radlagerung nach Anspruch 3 oder Anspruch 4, **gekennzeichnet durch** eine ein- oder mehrfache Tellerfeder als Druckfeder (23).

6. Radlagerung nach Anspruch 5, **dadurch gekennzeichnet, daß** sich die Tellerfeder auf ihrem großen Durchmesser an dem Außenteil (17), und auf ihrem kleinen Durchmesser an dem Innenteil (16) abstützt.

7. Radlagerung nach einem der vorangehenden Ansprüche 2 bis 6, **dadurch gekennzeichnet, daß** sich das Innenteil (16) zusammensetzt aus einem hülsenförmigen Abschnitt (19) sowie einem flanschförmigen Abschnitt (11), und daß sich der flanschförmige Abschnitt aus einem inneren Flanschabschnitt (21), an dem die Gegenverzahnung (27) ausgebildet ist, und einem äußeren Flanschabschnitt (22) zusammensetzt, mit dem die Achsmutter eine Hinterschneidung der Radnabe (7) hintergreift.

8. Radlagerung nach Anspruch 7, **dadurch gekennzeichnet, daß** die Hinterschneidung der Radnabe (7) durch einen in die äußere Öffnung der Radnabe eingesetzten Sprengring (12) gebildet wird.

9. Radlagerung nach Anspruch 7 oder Anspruch 8, **dadurch gekennzeichnet, daß** sich das Innenteil (16) mit seinem inneren Flanschabschnitt (21) axial gegen einen auf dem Achsschenkel (2) sitzenden Lagerinnenring (14) des äußeren Wälzlagers (6) der Radlagerung abstützt.

10. Radlagerung nach einem der vorangehenden Ansprüche, **dadurch gekennzeichnet, daß** eines der beiden Teile Achsschenkel (2) bzw. Innenteil (16) mit einer sich axial erstreckenden Nut (33) versehen ist, in der ein Sicherungselement (25) sitzt, und daß ein aus der Nut (33) herausragender Abschnitt des Sicherungselementes mit einem Profil, vorzugsweise einer Zahnstruktur (34) versehen ist, das formschlüssig in eine sich über 360° erstreckende Profilierung, vorzugsweise eine Geradverzahnung (35) mit axial verlaufenden Zähnen an dem anderen der beiden Teile Innenteil (16) bzw. Achsschenkel (2) eingreift.

11. Radlagerung nach Anspruch 10, **dadurch gekennzeichnet, daß** der in Umfangsrichtung bestehende Spielraum des Sicherungselementes (25) in der Nut (33) gleich groß oder größer ist als die Zahnteilung (t) der Geradverzahnung (35).

12. Radtagerung nach Anspruch 1 oder Anspruch 2, **dadurch gekennzeichnet, daß** die Sperrelemente federbelastete Stifte (36) oder Kugeln sind, die in eine Verzahnung (27) einrastbar gestaltet sind, vorzugsweise unter dem Druck einer Tellerfeder (23).

## Claims

1. Wheel mounting, in particular for non-powered vehicle axles, with a wheel hub (7) which is rotatably mounted on an axle stub (2) by means of rolling contact bearings (5, 6) and is held by an axle nut (10) which is screwed with an internal thread onto an external thread (15) of the axle stub (2),
**characterised in that** the axle nut (10) consists of an internal part (16), which is provided with the internal thread, and an external part (17), which is coaxial therewith and on which wrench faces (18) required for tightening and loosening the axle nut (10) are formed, that the external part (17) can move on the internal part (16) and is connected to the internal part (16) by means of one or more spring-loaded detent elements such that a substantially higher torque can be transmitted to the internal part (16) in the loosening direction than in the tightening direction.

2. Wheel mounting according to Claim 1, **characterised in that** the external part (17), being spring-loaded by an axial tooth system (26), meshes with a corresponding mating tooth system (27) of the internal part (16), and that the tooth system comprises flanks (28a, 28b) which, in the case of the external part (17), are ramp-shaped in the tightening direction (29, 38) and steep in the loosening direction.

3. Wheel mounting according to Claim 2, **characterised in that** the tooth system (26) is moulded onto one end face of the external part (17), and that a compression spring (23) is supported at the other end face (31), remote from the end face, of the external part (17) in order to achieve spring loading.

4. Wheel mounting according to Claim 1 or Claim 2, **characterised in that** a compression spring (23) for absorbing the reaction forces is supported at a radially protruding collar (30) of the internal part (16).

5. Wheel mounting according to Claim 3 or Claim 4, **characterised by** a single or multiple Belleville spring as compression spring (23).

6. Wheel mounting according to Claim 5, **characterised in that** the Belleville spring is supported on its large diameter at the external part (17) and on its small diameter at the internal part (16).

7. Wheel mounting according to any one of the preceding Claims 2 to 6,
**characterised in that** the internal part (16) consists of a sleeve-shaped portion (19) and a flange-shaped portion (11), and that the flange-shaped portion consists of an internal flange portion (21), at which the mating tooth system (27) is formed, and an external flange portion (22), with which the axle nut engages behind an undercut of the wheel hub (7).

8. Wheel mounting according to Claim 7, **characterised in that** the undercut of the wheel hub (7) is formed by a circlip (12) which is inserted in the external opening of the wheel hub.

9. Wheel mounting according to Claim 7 or Claim 8, **characterised in that** the internal part (16) is supported axially with its internal flange portion (21) against an inner bearing race (14), which is seated on the axle stub (2), of the external rolling contact bearing (6) of the wheel mounting.

10. Wheel mounting according to any one of the preceding Claims, **characterised in that** one of the two parts axle stub (2) and internal part (16), respectively, is provided with an axially extending groove (33) in which a retaining element (25) is seated, and that a portion of the retaining element which projects out of the groove (33) is provided with a profile, preferably a tooth structure (34), which meshes positively with profiling extending over 360°, preferably a straight tooth system (35) with axially extending teeth, at the other of the two parts internal part (16) and axle stub (2), respectively.

11. Wheel mounting according to Claim 10, **characterised in that** the clearance of the retaining element (25) in the groove (33) in the circumferential direction is equal to or greater than the pitch (t) of the straight tooth system (35).

12. Wheel mounting according to Claim 1 or Claim 2, **characterised in that** the detent elements are spring-loaded pins (36) or balls which are formed such that they can engage in a tooth system (27), preferably under the pressure of a Belleville spring (23).

## Revendications

1. Roulement de roue, en particulier pour essieux non menés de véhicules, comprenant un moyeu de roue (7) qui est monté en rotation sur une fusée d'essieu (2) au moyen de paliers à roulements (5, 6) et qui est retenu par un écrou d'essieu (10) vissé par un filetage intérieur sur un filetage extérieur (15) de la fusée d'essieu (2), **caractérisé en ce que** l'écrou d'essieu (10) se compose d'une partie intérieure (16), qui est munie du filetage intérieur, et d'une partie extérieure (17) qui est coaxiale à la précédente et sur laquelle sont conçus les pans de vissage (18) nécessaires au serrage et au desserrage de l'écrou d'essieu (10), et **en ce que** la partie extérieure (17) est mobile sur la partie intérieure (16) et est reliée à la partie intérieure (16) au moyen d'un ou de plusieurs éléments d'arrêt sollicités par ressort, de façon que le couple transmis à la partie intérieure (16) soit beaucoup plus élevé dans le sens de desserrage que dans le sens de serrage.

2. Roulement de roue selon la revendication 1, **caractérisé en ce que**, par l'intermédiaire d'une denture axiale (26), la partie extérieure (17) est en prise, moyennant une sollicitation par ressort, avec une contre-denture correspondante (27) de la partie intérieure (16), et **en ce que** la denture comporte des flancs (28a, 28b) qui, dans le cas de la partie extérieure (17), sont en forme de rampe dans le sens de serrage (29, 38) et à forte pente dans le sens de desserrage.

3. Roulement de roue selon la revendication 2, **caractérisé en ce que** la denture (26) est rapportée sur la face frontale de la partie extérieure (17), et **en ce que**, pour réaliser la sollicitation par ressort, un ressort de pression (23) prend appui sur l'autre face frontale (31), orientée à l'opposé de cette face frontale, de la partie extérieure (17).

4. Roulement de roue selon la revendication 1 1 ou la revendication 2, **caractérisé en ce qu'**un ressort de pression (23) destiné à absorber les forces de réaction prend appui sur un collet en saillie radiale (30) de la partie intérieure (16).

5. Roulement de roue selon la revendication 3 ou la revendication 4, **caractérisé par** un ressort Belleville simple ou multiple faisant fonction de ressort de pression (23).

6. Roulement de roue selon la revendication 5, **caractérisé en ce que** le ressort Belleville prend appui, par son grand diamètre, sur la partie extérieure (17) et, par son petit diamètre, sur la partie intérieure (16).

7. Roulement de roue selon une des revendications précédentes 2 à 6, **caractérisé en ce que** la partie intérieure (16) se compose d'une portion en forme de manchon (19) ainsi que d'une portion en forme de collerette (11), et **en ce que** la portion en forme de collerette se compose d'une portion de collerette intérieure (21), sur laquelle est réalisée la contre-denture (27), et d'une portion de collerette extérieure (22), avec laquelle l'écrou d'essieu s'engage derrière une contre-dépouille du moyeu de roue (7).

8. Roulement de roue selon la revendication 7, **caractérisé en ce que** la contre-dépouille du moyeu de roue (7) est formée par un circlip (12) inséré dans l'ouverture extérieure du moyeu de roue.

9. Roulement de roue selon la revendication 7 ou la revendication 8, **caractérisé en ce que**, par l'intermédiaire de sa portion de collerette intérieure (21), la partie intérieure (16) prend appui axialement contre une bague intérieure de palier (14) du palier à roulement (6), laquelle repose sur la fusée d'essieu (2).

10. Roulement de roue selon une des revendications précédentes, **caractérisé en ce qu'**un des deux éléments que sont la fusée d'essieu (2) ou, respectivement, la partie intérieure (16) est pourvu d'une rainure à extension axiale (33), dans laquelle s'engage un élément de retenue (25), et **en ce qu'**une portion de l'élément de retenue dépassant de la rainure (33) est pourvue d'un profil, de préférence d'une structure dentée (34) qui pénètre par complémentarité de formes dans une partie profilée s'étendant sur 360°, de préférence dans une denture droite (35) avec des dents à extension axiale disposée sur l'autre des deux éléments que sont la partie intérieure (16) ou, respectivement, la fusée d'essieu (2).

11. Roulement de roue selon la revendication 10, **caractérisé en ce que** le jeu dont dispose, dans la direction circonférentielle, l'élément de retenue (25) à l'intérieur de la rainure (33) est égal ou supérieur au pas de dent (t) de la denture droite (35).

12. Roulement de roue selon la revendication 1 1 ou la revendication 2, **caractérisé en ce que** les éléments d'arrêt sont des broches (36) ou des billes sollicités par ressort, qui sont conçus pour s'encliqueter dans une denture (27), de préférence sous la pression d'un ressort Belleville (23).
